# EUROPEAN PATENT APPLICATION

(11) **EP 4 375 544 A1**
(43) Date of publication of application: **29.05.2024**
(21) Application number: 22845918.6
(22) Date of filing: 19.07.2022
(51) Int. Cl.: F16J 15/10

(54) **GASKET**

(30) Priority: 19.07.2021 JP 2021118483
(71) Applicant: NOK Corporation, Minato-ku Tokyo 105-8585 (JP)
(72) Inventor: OGATA Chiyota, Aso-shi, Kumamoto 869-2231 (JP); USHIJIMA Shinji, Aso-shi, Kumamoto 869-2231 (JP); MIKI Yohei, Aso-shi, Kumamoto 869-2231 (JP); YAMABE Tadahisa, Aso-shi, Kumamoto 869-2231 (JP)
(74) Representative: Global IP Europe Patentanwaltskanzlei
(86) International application number: PCT/JP2022/028062
(87) International publication number: WO 2023/002985

(57) **Abstract**

Sealing performance is enhanced. A gasket (1) includes protrusion portions (10, 11) that respectively protrude to contact side surfaces facing each other of the groove to which the gasket is to be attached, an upper side seal lip portion (20) that is formed to contact one of surfaces facing each other between members, a lower side seal lip portion (30) that is formed to contact another one of the surfaces facing each other between the members, and a joining portion (40) that joins the upper side seal lip portion (20) and the lower side seal lip portion (30), wherein the joining portion (40) extends along a virtual straight line (x) in a section of the gasket (1), the upper side seal lip portion (20) has upper side seal lips (21, 22) extending side by side between the protrusion portions (10, 11) in the joining portion (40), the lower side seal lip portion (30) has lower side seal lips (31, 32) extending side by side between the protrusion portions (10, 11) in the joining portion (40), each of the upper side seal lips (21, 22) is tapered, and each of the lower side seal lips (31, 32) is tapered.

## Description

### Technical Field

The present invention relates to a gasket.

### Background Art

Conventionally, gaskets have been used as sealing devices to seal gaps between a plurality of members that are fixed to each other so that the members cannot move relative to each other, such as a housing and a cover or a tube and a tube, in order to form a sealed space. Gaskets are used to seal spaces in the cases of batteries of fuel cell cars, electric automobiles, hybrid cars, and the like, for example. Some of these conventional gaskets are each attached to an annular groove formed in each or one of the members that are to be fixed to close the gap between the members.

Some of the gaskets as above have a pair of protrusions formed on both side surfaces so that each of the gaskets does not fall from the groove when the members that fix the pair of members to each other are assembled. The pair of protrusions are pressed against the side surfaces of the groove when the gasket is attached to the groove, the gasket is held in the groove, and thereby the gasket is prevented from falling from the groove (for example, see Patent Literature 1).

### Document List

### Patent Literature

Patent Literature 1: Japanese Patent Application Publication No. 2004-180824

### Summary of Invention

### Technical Problem

As described above, some of the conventional gaskets have a structure to prevent fall of the gaskets from the grooves to which the gaskets are attached. The gaskets having the structure to prevent fall like this are also required to have a structure that can further enhance sealing performance, similarly to the other conventional gaskets.

The present invention is made in view of the above-described problem.

### Solution to Problem

In order to attain the above-described object, a gasket according to the present invention is a gasket that is attached to a groove that opens into a gap between members to close the gap, characterized by including protrusion portions that are portions that respectively protrude to contact side surfaces facing each other of the groove, a one side seal lip portion that is a portion formed to contact one of surfaces facing each other via the gap, another side seal lip portion that is a portion formed to contact another one of the surfaces facing each other via the gap, and a joining portion that is a portion that joins the one side seal lip portion and the other side seal lip portion, wherein the joining portion extends along a virtual straight line in a section orthogonal to an extending direction of the gasket, the one side seal lip portion has a pair of one side seal lips extending side by side between the protrusion portions in the joining portion, the other side seal lip portion has a pair of other side seal lips extending side by side between the protrusion portions in the joining portion, each of the one side seal lips is tapered, and each of the other side seal lips is tapered.

In the gasket according to one aspect of the present invention, side surfaces facing in opposite directions to each other of each of the one side seal lips incline with respect to the virtual straight line in the section, and side surfaces facing in opposite directions to each other of each of the other side seal lips incline with respect to the virtual straight line in the section.

In the gasket according to one aspect of the present invention, the protrusion portions are formed on the joining portion.

In the gasket according to one aspect of the present invention, the protrusion portions protrude in a direction of the virtual straight line, in the section.

In the gasket according to one aspect of the present invention, the joining portion is in a shape in which the virtual straight line is a center line, in the section.

In the gasket according to one aspect of the present invention, the one side seal lip portion and the other side seal lip portion are symmetrical with respect to the virtual straight line, in the section.

In the gasket according to one aspect of the present invention, each of the protrusion portions is in a shape in which the virtual straight line is a center line, in the section.

### Effects of Invention

According to a gasket of the present invention, the sealing performance can be enhanced.

### Brief Description of Drawings

[Fig. 1] A plan view of a gasket according to an embodiment of the present invention.
[Fig. 2] A sectional view illustrating a section in line A-A of the gasket illustrated in Fig. 1.
[Fig. 3] A view illustrating the gasket in a state of being attached to a groove of a case.
[Fig. 4] A view illustrating the gasket in a usage state where a cover is attached to the case and closes a gap between the case and the cover.
[Fig. 5] A sectional view illustrating a section in line A-A of a modified example of the gasket according to the embodiment of the present invention.

### Description of Embodiment

Hereinafter, an embodiment of the present invention will be described with reference to the drawings.

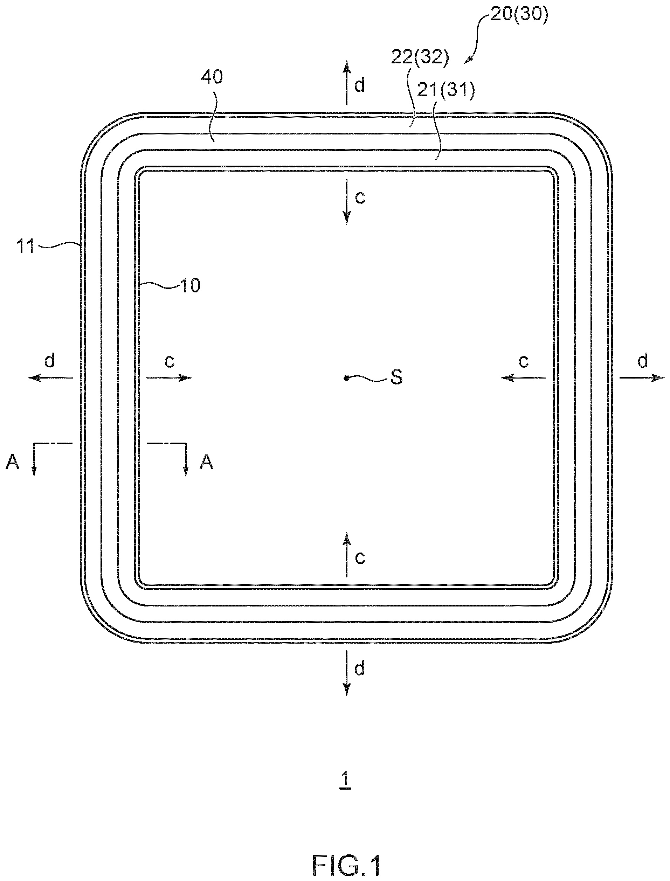

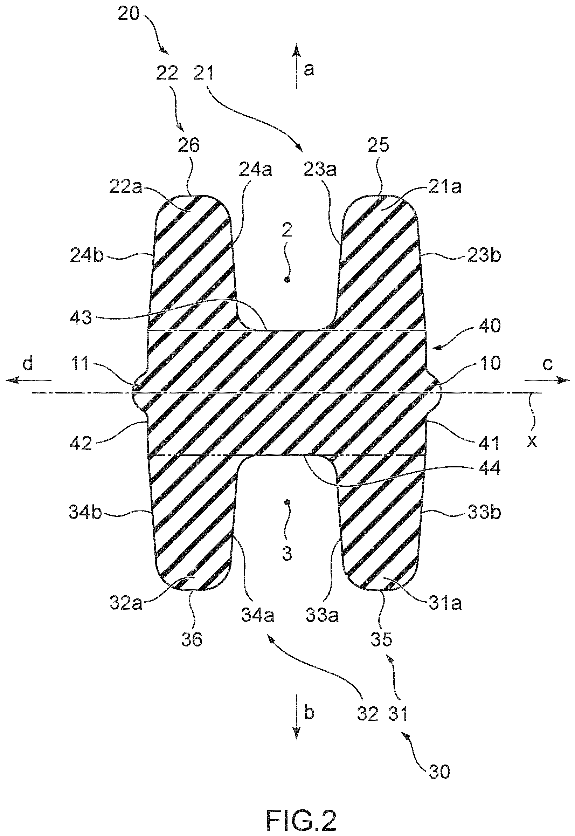

Fig. 1 is a plan view of a gasket 1 according to an embodiment of the present invention, and Fig. 2 is a sectional view illustrating a section in line A-A of the gasket 1 illustrated in Fig. 1. In other words, Fig. 2 illustrates the section orthogonal to an extending direction in which the gasket 1 extends. Hereinafter, for convenience of explanation, a side (one side) in an arrow a (see Fig. 2) direction is defined as an upper side, and a side (another side) in an arrow b (see Fig. 2) direction is defined as a lower side. Arrows a and b respectively extend parallel to one straight line and extend in a direction in which a space S surrounded by the gasket 1 opens in plan view. Fig. 1 illustrates the gasket 1 seen from the upper side. Further, a space S side (arrow c direction side in Figs. 1 and 2) surrounded by the gasket 1 is defined as an inner periphery side, and an opposite side (arrow d direction side in Figs. 1 and 2) to the inner periphery side is defined as an outer periphery side. The upper side, the lower side and the like described above do not limit a position of the gasket 1 in space, and the gasket 1 can assume any position in space.

As illustrated in Figs. 1 and 2, the gasket 1 according to the embodiment of the present invention is a gasket that is attached to a groove that opens into a gap between members to close the gap. The gasket 1 includes protrusion portions 10 and 11 that are portions respectively protruding to contact side surfaces facing each other, of the groove to which the gasket 1 is attached, a one side seal lip portion 20 that is a portion formed to contact one of surfaces facing each other via the gap between the members, another side seal lip portion 30 that is a portion formed to contact another one of the surfaces facing each other via the gap between the members, and a joining portion 40 that is a portion that joins the one side seal lip portion 20 and the other side seal lip portion 30. The joining portion 40 extends along an virtual straight line x that is an virtual straight line, in a section orthogonal to an extending direction of the gasket 1. The one side seal lip portion 20 has a pair of one side seal lips 21 and 22 extending side by side between the protrusion portions 10 and 11 in the joining portion 40. The other side seal lip portion 30 has a pair of other side seal lips 31 and 32 extending side by side between the protrusion portions 10 and 11 in the joining portion 40. Each of the one side seal lips 21 and 22 is tapered, and each of the other side seal lips 31 and 32 is tapered. Hereinafter, the gasket 1 will be specifically described.

In the following explanation, the one side seal lip portion 20 is also called the upper side seal lip portion 20, the one side seal lips 21 and 22 are also called the upper side seal lips 21 and 22, the other side seal lip portion 30 is also called the lower side seal lip portion 30, and the other side seal lips 31 and 32 are also called the lower side seal lips 31 and 32.

As illustrated in Fig. 1, the gasket 1 annularly extends, and the protrusion portions 10 and 11, the upper side seal lip portion 20, and the lower side seal lip portion 30 also annularly extend. The gasket 1 is integrally made of a rubber-like elastic body, and the protrusion portions 10 and 11, the upper side seal lip portion 20, and the lower side seal lip portion 30 are portions of the integral gasket 1 formed of the same material. A shape (hereinafter, also simply called a sectional shape) of a section orthogonal to the extending direction of the gasket 1 (hereinafter, also simply called a section) is a uniform or substantially uniform shape over the extending direction (throughout an entire periphery).

A sectional shape of the gasket 1 is specifically a shape as illustrated in Fig. 2. As described above, the joining portion 40 extends along the virtual straight line x, for example, extends parallel or substantially parallel to the virtual straight line x, and presents a rectangular or substantially rectangular shape in the section. The joining portion 40 has a shape in which the virtual straight line x is a center line or a substantially center line in the section.

In a usage state of the gasket 1 described later, the protrusion portions 10 and 11 that contact the side surfaces facing each other of the groove to which the gasket 1 is attached extend annularly in the extending direction of the gasket 1 as illustrated in Fig. 1, extend around the entire periphery of the gasket 1, and are formed in the joining portion 40, for example. Specifically, the protrusion portions 10 and 11 are respectively formed on an inner peripheral surface 41 that is a surface facing an inner periphery side of the joining portion 40, and an outer peripheral surface 42 that is a surface facing an outer periphery side of the joining portion 40. In other words, the protrusion portion 10 protrudes to the inner periphery side from the inner peripheral surface 41, and the protrusion portion 11 protrudes to the outer periphery side from the outer peripheral surface.

As illustrated in Fig. 2, for example, the protrusion portions 10 and 11 each have a shape that presents a curvilinear outline in the section. Sectional shapes of the protrusion portions 10 and 11 are not limited to the shapes presenting a curvilinear outline, but may be other shapes such as a shape that presents an outline drawn by a combination of straight lines, a shape that presents an outline drawn by a combination of a curved line and a straight line, and the like. The shapes of the protrusion portions 10 and 11 can be such shapes as to respectively protrude to the inner periphery side and the outer periphery side from the inner peripheral surface 41 and the outer peripheral surface 42 of the joining portion 40, and contact the side surfaces facing each other of the groove to which the gasket 1 is attached in the usage state.

As illustrated in Fig. 2, the protrusion portions 10 and 11 protrude in a direction of the virtual straight line x, for example, and more specifically, the protrusion portions 10 and 11 have such shapes that the virtual straight line x is the center line or substantially center line in the section. In other words, the protrusion portion 10 is provided at a center or a substantially center in an up-down direction that is a direction orthogonal to the virtual straight line x, in the inner peripheral surface 41 of the joining portion 40, and the protrusion portion 11 is provided at the center or substantially center in the up-down direction that is the direction orthogonal to the virtual straight line x, in the outer peripheral surface 42 of the joining portion 40. The positions in the joining portion 40, of the protrusion portions 10 and 11 are not limited to the aforementioned positions. Further, the protrusion portions 10 and 11 do not have to be provided respectively on the inner peripheral surface 41 and the outer peripheral surface 42 of the joining portion 40, and may be provided at the upper side seal lip portion 20 or the lower side seal lip portion 30.

As illustrated in Fig. 2, the upper side seal lip portion 20 is formed on an upper side of the joining portion 40, and the lower side seal lip portion 30 is formed on a lower side of the joining portion 40. In Fig. 2, a boundary between the upper side seal lip portion 20 and the joining portion 40 and a boundary between the lower side seal lip portion 30 and the joining portion 40 are illustrated by two-dot chain lines.

As described above, the upper side seal lip portion 20 has a pair of upper side seal lips 21 and 22 that extend side by side between the protrusion portions 10 and 11 in the joining portion 40. Specifically, the pair of upper side seal lips 21 and 22 are arranged side by side with a space left in the virtual straight line x direction. As illustrated in Fig. 1, the upper side seal lips 21 and 22 annularly extend in the extending direction of the gasket 1, and extend around the entire periphery of the gasket 1. The upper side seal lip 21 is provided at the inner periphery side from the upper side seal lip 22. In each of the upper side seal lips 21 and 22, portions on the tip end side (tip end portions 21a and 22a) are formed to contact one (surface on an upper side) of surfaces facing each other via the gap between the members to which the gasket 1 is attached, in the usage state of the gasket 1 described later.

As described above, each of the upper side seal lips 21 and 22 is tapered, and as illustrated in Fig. 2, sectional shapes of each of the upper side seal lips 21 and 22 have widths that become narrower as progress toward tip end surfaces 25 and 26. The width of the upper side seal lip 21 is a space between an inner side surface 23a and an outer side surface 23b in the virtual straight line x direction, and the width of the upper side seal lip 22 is a space between an inner side surface 24a and an outer side surface 24b in the virtual straight line x direction. The inner side surface 23a of the upper side seal lip 21 is a surface facing an outer periphery side of the upper side seal lip 21, and the outer side surface 23b of the upper side seal lip 21 is a surface facing an inner periphery side of the upper side seal lip 21. Further, the inner side surface 24a of the upper side seal lip 22 is a surface facing the inner periphery side of the upper side seal lip 22, and the outer side surface 24b of the upper side seal lip 22 is a surface facing the outer periphery side of the upper side seal lip 22.

On the tip end portion 21a of the upper side seal lip 21, the tip end surface 25 that is a surface facing a protruding direction of the upper side seal lip 21 is formed. The tip end surface 25 is a surface that connects the inner side surface 23a and the outer side surface 23b at an end on a tip end side, and is an annular surface that draws a straight line or substantially straight line in the section, as illustrated in Fig. 2, for example. The tip end surface 25 may have another shape that draws a curved line or a combination of a curved line and a straight line in the section.

The upper side seal lip 21 is a seal lip that protrudes in a direction orthogonal or substantially orthogonal to the virtual straight line x. As described above, the upper side seal lip 21 has a tapered shape, as illustrated in Fig. 2, for example, the inner side surface 23a inclines to the inner periphery side, the outer side surface 23b inclines to the outer periphery side, and the inner side surface 23a and the outer side surface 23b are inclined surfaces. The inner side surface 23a and the outer side surface 23b incline at the same angle or substantially the same angle with respect to the straight line orthogonal to the virtual straight line x. The inner side surface 23a and the outer side surface 23b may incline at different angles from each other with respect to the straight line orthogonal to the virtual straight line x. Further, the inner side surface 23a may have a different shape from the shape illustrated in Fig. 2, does not have to have the shape in which the section draws a straight line or substantially straight line, and may have another shape in which the section draws a curved line or a line of a combination of a curved line and a straight line, as long as the upper side seal lip 21 has a shape that is tapered. Similarly, the outer side surface 23b may have a shape different from the shape illustrated in Fig. 2, does not have to have the shape in which a section draws a straight line or substantially straight line, and may have another shape in which the section draws a curved line or a line of a combination of a curved line and a straight line as long as the upper side seal lip 21 has a shape that is tapered.

On the tip end portion 22a of the upper side seal lip 22, the tip end surface 26 that is a surface facing a protruding direction of the upper side seal lip 22 is formed. The tip end surface 26 is a surface that connects the inner side surface 24a and the outer side surface 24b at an end on a tip end side, and is an annular surface that draws a straight line or substantially straight line in the section, as illustrated in Fig. 2, for example. The tip end surface 26 may have another shape that draws a curved line or a combination of a curved line and a straight line in the section.

The upper side seal lip 22 is a seal lip that protrudes in a direction orthogonal or substantially orthogonal to the virtual straight line x. As described above, the upper side seal lip 22 has a tapered shape, as illustrated in Fig. 2, for example, the inner side surface 24a inclines to the outer periphery side, the outer side surface 24b inclines to the inner periphery side, and the inner side surface 24a and the outer side surface 24b are inclined surfaces. The inner side surface 24a and the outer side surface 24b incline at the same angle or substantially the same angle with respect to the straight line orthogonal to the virtual straight line x. The inner side surface 24a and the outer side surface 24b may incline at different angles from each other with respect to the straight line orthogonal to the virtual straight line x. Further, the inner side surface 24a may have a different shape from the shape illustrated in Fig. 2, do not have to have the shape in which a section draws a straight line or substantially straight line, and may have another shape in which the section draws a curved line or a line of a combination of a curved line and a straight line, as long as the upper side seal lip 22 has a shape that is tapered. Similarly, the outer side surface 24b may have a shape different from the shape illustrated in Fig. 2, does not have to have the shape in which a section draws a straight line or substantially straight line, and may have another shape in which the section draws a curved line or a line of a combination of a curved line and a straight line, as long as the upper side seal lip 22 has the shape that is tapered.

As illustrated in Fig. 2, the outer side surface 23b of the upper side seal lip 21 is connected to a surface (inner peripheral surface 41) facing the inner periphery side of the joining portion 40, and the outer side surface 24b of the upper side seal lip 22 is connected to a surface (outer peripheral surface 42) facing the outer periphery side of the joining portion 40. Further, the inner side surface 23a of the upper side seal lip 21 and the inner side surface 24a of the upper side seal lip 22 face each other with a space left in the virtual straight line x direction. As a result, in the gasket 1, a recessed part 2 is formed, which is an annular space defined by the inner side surface 23a of the upper side seal lip 21, the inner side surface 24a of the upper side seal lip 22, and an annular surface (upper side surface 43) that faces an upper side of the joining portion 40.

As described above, the lower side seal lip portion 30 has a pair of lower side seal lips 31 and 32 that extend side by side between the protrusion portions 10 and 11 in the joining portion 40. Specifically, the pair of lower side seal lips 31 and 32 are arranged side by side with a space left in the virtual straight line x direction. As illustrated in Fig. 1, the lower side seal lips 31 and 32 annularly extend in the extending direction of the gasket 1, and extend around the entire periphery of the gasket 1. The lower side seal lip 31 is provided at the inner periphery side from the lower side seal lip 32. In each of the lower side seal lips 31 and 32, portions on the tip end side (tip end portions 31a and 32a) are formed to contact another one (surface on a lower side) of surfaces facing each other via a gap between the members to which the gasket 1 is attached, in the usage state of the gasket 1 described later.

As described above, each of the lower side seal lips 31 and 32 are tapered, and as illustrated in Fig. 2, sectional shapes of each of the lower side seal lips 31 and 32 have widths that become narrower as progress toward tip end surfaces 35 and 36. The width of the lower side seal lip 31 is a space between an inner side surface 33a and an outer side surface 33b in the virtual straight line x direction, and the width of the lower side seal lip 32 is a space between an inner side surface 34a and an outer side surface 34b in the virtual straight line x direction. The inner side surface 33a of the lower side seal lip 31 is a surface facing an outer periphery side of the lower side seal lip 31, and the outer side surface 33b of the lower side seal lip 31 is a surface facing an inner periphery side of the lower side seal lip 31. Further, the inner side surface 34a of the lower side seal lip 32 is a surface facing an inner periphery side of the lower side seal lip 32, and the outer side surface 34b of the lower side seal lip 32 is a surface facing an outer periphery side of the lower side seal lip 32.

On the tip end portion 31a of the lower side seal lip 31, the tip end surface 35 that is a surface facing a protruding direction of the lower side seal lip 31 is formed. The tip end surface 35 is a surface that connects the inner side surface 33a and the outer side surface 33b at an end on a tip end side, and is an annular surface that draws a straight line or substantially straight line in the section, as illustrated in Fig. 2, for example. The tip end surface 35 may have another shape that draws a curved line or a line of a combination of a curved line and a straight line in the section.

The lower side seal lip 31 is a seal lip that protrudes in a direction orthogonal or substantially orthogonal to the virtual straight line x. As described above, the lower side seal lip 31 has a tapered shape, as illustrated in Fig. 2, for example, the inner side surface 33a inclines to the inner periphery side, the outer side surface 33b inclines to the outer periphery side, and the inner side surface 33a and the outer side surface 33b are inclined surfaces. The inner side surface 33a and the outer side surface 33b incline at the same angle or substantially the same angle with respect to the straight line orthogonal to the virtual straight line x. The inner side surface 33a and the outer side surface 33b may incline at different angles from each other with respect to the straight line orthogonal to the virtual straight line x. Further, the inner side surface 33a may have a different shape from the shape illustrated in Fig. 2, does not have to have the shape in which a section draws a straight line or substantially straight line, and may have another shape in which the section draws a curved line or a line of a combination of a curved line and a straight line, as long as the lower side seal lip 31 has a shape that is tapered. Similarly, the outer side surface 33b may have a shape different from the shape illustrated in Fig. 2, does not have to have the shape in which a section draws a straight line or substantially straight line, and may have another shape in which the section draws a curved line or a line of a combination of a curved line and a straight line as long as the lower side seal lip 31 has a shape that is tapered.

On the tip end portion 32a of the lower side seal lip 32, the tip end surface 36 that is a surface facing a protruding direction of the lower side seal lip 32 is formed. The tip end surface 36 is a surface that connects the inner side surface 34a and the outer side surface 34b at an end on a tip end side, and is an annular surface that draws a straight line or substantially straight line in the section, as illustrated in Fig. 2, for example. The tip end surface 36 may have another shape that draws a curved line or a combination of a curved line and a straight line in the section.

The lower side seal lip 32 is a seal lip that protrudes in a direction orthogonal or substantially orthogonal to the virtual straight line x. As described above, the lower side seal lip 32 has a tapered shape, as illustrated in Fig. 2, for example, the inner side surface 34a inclines to the outer periphery side, the outer side surface 34b inclines to the inner periphery side, and the inner side surface 34a and the outer side surface 34b are inclined surfaces. The inner side surface 34a and the outer side surface 34b incline at the same angle or substantially the same angle with respect to the straight line orthogonal to the virtual straight line x. The inner side surface 34a and the outer side surface 34b may incline at different angles from each other with respect to the straight line orthogonal to the virtual straight line x. Further, the inner side surface 34a may have a different shape from the shape illustrated in Fig. 2, does not have to have a shape in which the section draws a straight line or substantially straight line, and may have another shape in which the section draws a curved line or a line of a combination of a curved line and a straight line, as long as the lower side seal lip 32 has a shape that is tapered. Similarly, the outer side surface 34b may have a shape different from the shape illustrated in Fig. 2, does not have to have a shape in which a section draws a straight line or substantially straight line, and may have another shape in which the section draws a curved line or a line of a combination of a curved line and a straight line, as long as the lower side seal lip 32 has the shape that is tapered.

As illustrated in Fig. 2, the outer side surface 33b of the lower side seal lip 31 is connected to an inner peripheral surface 41 of the joining portion 40, and the outer side surface 34b of the lower side seal lip 32 is connected to an outer peripheral surface 42 of the joining portion 40. Further, the inner side surface 33a of the lower side seal lip 31 and the inner side surface 34a of the lower side seal lip 32 face each other with a space left in the virtual straight line x direction. As a result, in the gasket 1, a recessed part 3 is formed, which is an annular space defined by the inner side surface 33a of the lower side seal lip 31, the inner side surface 34a of the lower side seal lip 32, and an annular surface (lower side surface 44) that faces a lower side of the joining portion 40.

The gasket 1 has the aforementioned configuration, and in the direction orthogonal to the virtual straight line x, distances from the tip end surfaces 25 and 26 of the upper side seal lips 21 and 22 to a bottom surface (upper side surface 43 of the joining portion 40) of the recessed part 2 are respectively smaller than distances from the tip end surfaces 25 and 26 of the upper side seal lips 21 and 22 to the protrusion portions 10 and 11. In other words, a depth of the recessed part 2 is smaller than a depth from the tip end surface 25 of the upper side seal lip 21 to the protrusion portion 10, and is smaller than a depth from the tip end surface 26 of the upper side seal lip 22 to the protrusion portion 11. In the direction orthogonal to the virtual straight line x, distances from the tip end surfaces 35 and 36 of the lower side seal lips 31 and 32 to a bottom surface (lower side surface 44 of the joining portion 40) of the recessed part 3 are respectively smaller than distances from the tip end surfaces 35 and 36 of the lower side seal lips 31 and 32 to the protrusion portions 10 and 11. In other words, a depth of the recessed part 3 is smaller than a depth from the tip end surface 35 of the lower side seal lip 31 to the protrusion portion 10, and is smaller than a depth from the tip end surface 36 of the lower side seal lip 32 to the protrusion portion 11.

As illustrated in Fig. 2, in the section of the gasket 1, the upper side seal lip 21 and the upper side seal lip 22 are symmetrical or substantially symmetrical with respect to the recessed part 2, and the lower side seal lip 31 and the lower side seal lip 32 are symmetrical or substantially symmetrical with respect to the recessed part 3. In the section of the gasket 1, the upper side seal lip 21 and the lower side seal lip 31 are symmetrical or substantially symmetrical with respect to the joining portion 40, and the upper side seal lip 22 and the lower side seal lip 32 are symmetrical or substantially symmetrical with respect to the joining portion 40. In the section of the gasket 1, the respective portions do not have to be symmetrical as described above. Further, the section of the gasket 1 is symmetrical or substantially symmetrical with respect to the virtual straight line x, and is symmetrical or substantially symmetrical with respect to a straight line orthogonal to the virtual straight line x. Note that the section of the gasket 1 does not have to be symmetrical with respect to the virtual straight line x as described above.

Next, an operation of the gasket 1 having the aforementioned configuration will be described.

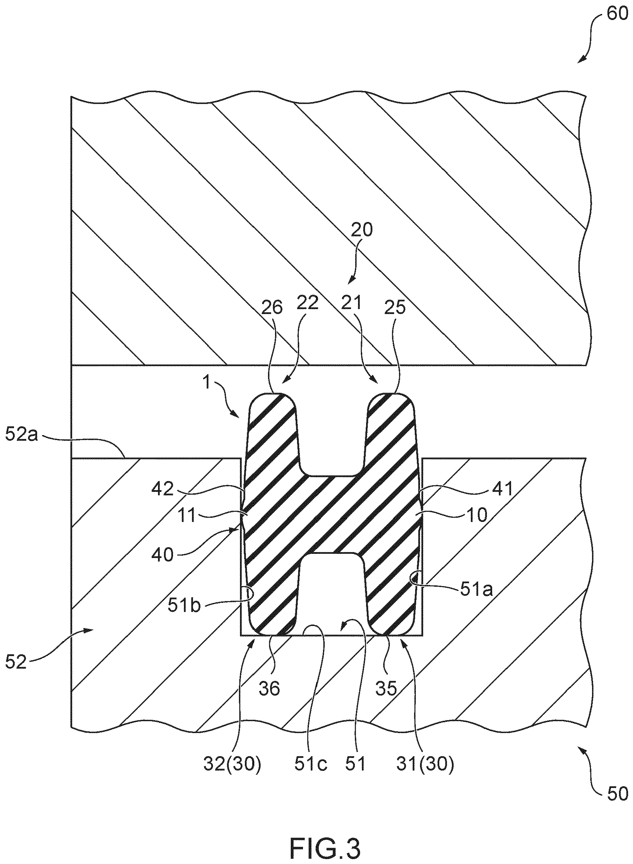

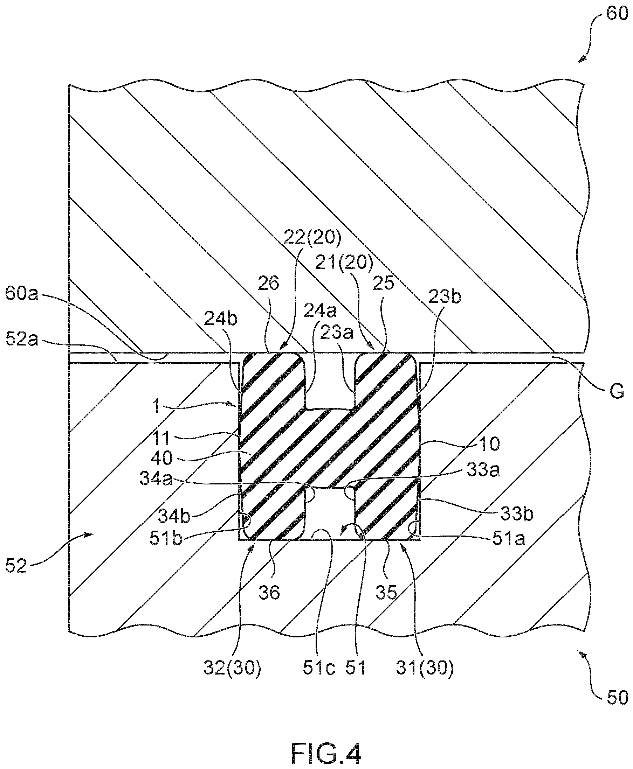

The gasket 1 is used to close the gap between the members by being attached to the groove that opens into the gap between the members, as described above. The gasket 1 is used to seal a space of an inside between members in the pair of members of a case 50 and a cover 60, as illustrated in Figs. 3 and 4, for example. Fig. 3 is a view illustrating the gasket 1 in a state of being attached to a groove 51 of the case 50, and Fig. 4 is a view illustrating the gasket 1 in a usage state in which the gasket 1 closes a gap between the case 50 and the cover 60 with the cover 60 attached to the case 50.

The case 50 and the cover 60 are members that form a housing for a battery such as a fuel battery, or a lithium ion battery, for example, and the fuel battery or the like is accommodated inside of the case 50. Note that an attaching target of the gasket 1 for which the gasket 1 is used is not limited to the housing for the battery. Further, the attaching target of the gasket 1 is not limited to a pair of members, but the gasket 1 is also used to close gaps among three or more members.

As illustrated in Fig. 3, the annular groove 51 is formed in an outer edge portion 52 of the case 50, for example, so that the gasket 1 can be attached to this groove 51. The groove 51 is recessed from an upper surface 52a of the outer edge portion 52 of the case 50, and opens into the gap between the case 50 and the cover 60 as illustrated in Fig. 4. The groove 51 has a pair of side surfaces 51a and 51b that face each other, and a bottom surface 51c that spreads between the side surfaces 51a and 51b, as illustrated in Fig. 3. The side surface 51a is a side surface positioned on an inner side of the case 50, and the side surface 51b is a side surface positioned on an outer side of the case 50. The groove 51 may be formed in the cover 60 instead of the case 50. Further, grooves may be formed in the case 50 and the cover 60.

As illustrated in Fig. 3, in the state where the gasket 1 is attached to the groove 51 of the case 50, the protrusion portions 10 and 11 respectively contact the side surfaces 51a and 51b of the groove 51. By contact of the protrusion portions 10 and 11, the gasket 1 is held in the groove 51 of the case 50 with a predetermined force. Thereby, prevention of falling of the gasket 1 from the groove 51 is achieved.

The protrusion portions 10 and 11 are respectively formed on the inner peripheral surface 41 and the outer peripheral surface 42 of the joining portion 40, and therefore when the gasket 1 is accommodated in the groove 51, the protrusion portions 10 and 11 are respectively compressed between the joining portion 40 extending between the protrusion portions 10 and 11 and the side surfaces 51a and 51b of the groove 51. Therefore, reaction forces of the protrusion portions 10 and 11 can be enhanced, a holding force for the gasket 1 into the groove 51 by the protrusion portions 10 and 11 can be enhanced, and a fall prevention function of the gasket 1 from the groove 51 can be improved. The holding force by the protrusion portions 10 and 11 can be adjusted by changing protrusion amounts of the respective protrusion portions 10 and 11 from the inner peripheral surface 41 and the outer peripheral surface 42 of the joining portion 40, widths in the up-down direction of the protrusion portions 10 and 11, and the like.

As described above, in the state where the gasket 1 is attached to the groove 51, the protrusion portions 10 and 11 respectively contact the side surfaces 51a and 51b of the groove 51. Therefore, lengths in the up-down direction of the upper side seal lips 21 and 22, lengths in the up-down direction of the lower side seal lips 31 and 32, or positions in the up-down direction of the protrusion portions 10 and 11 in the gasket 1 are such lengths or positions that the protrusion portions 10 and 11 respectively contact the side surfaces 51a and 51b of the groove 51 in a state where the respective tip end surfaces 25 and 26 of the upper side seal lips 21 and 22, or the respective tip end surfaces 35 and 36 of the lower side seal lips 31 and 32 contact the bottom surface 51c of the groove 51. In the usage state of the gasket 1 illustrated in Fig. 4, the lower side seal lip portion 30 is accommodated in the groove 51, but in the usage state of the gasket 1, the upper side seal lip portion 20 may be accommodated in the groove 51.

When the cover 60 is fixed to the case 50 where the gasket 1 is attached to the groove 51 with a bolt or the like, as illustrated in Fig. 4, the gasket 1 is compressed between the case 50 and the cover 60 and brought into the usage state. In the state where the cover 60 is attached to the case 50, a gap G is formed between an upper surface 52a of the case 50 and an inner surface 60a of the cover 60 facing the upper surface 52a, and the gap G is closed in the position of the gasket 1.

In the usage state, the lower side seal lips 31 and 32 respectively contact the bottom surface 51c of the groove 51 in the tip end surfaces 35 and 36, and the upper side seal lips 21 and 22 respectively contact parts of the inner surface 60a of the cover 60 which face the bottom surface 51c of the groove 51 in the tip end surfaces 25 and 26. Further, in the usage state, the lower side seal lips 31 and 32 are compressed between the joining portion 40 and the bottom surface 51c of the groove 51, and the upper side seal lips 21 and 22 are compressed between the joining portion 40 and the inner surface 60a of the cover 60. In this way, in the usage state, the respective tip end surfaces 25 and 26 of the upper side seal lips 21 and 22 are pressed against the inner surface 60a of the cover 60, the respective tip end surfaces 35 and 36 of the lower side seal lips 31 and 32 are pressed against the bottom surface 51c of the groove 51, the gasket 1 closes the gap G between the case 50 and the cover 60, and seals the space formed by the case 50 and the cover 60.

When the gasket 1 is attached opposite to the illustrated example, the upper side seal lips 21 and 22 contact the bottom surface 51c of the groove 51 similarly to the lower side seal lips 31 and 32 illustrated in Fig. 4, and the lower side seal lips 31 and 32 contact the inner surface 60a of the cover 60 similarly to the upper side seal lips 21 and 22 illustrated in Fig. 4, and the gasket 1 closes the gap G between the case 50 and the cover 60.

As described above, each of the upper side seal lips 21 and 22 is tapered in the extending direction toward the tip, and easily deforms in the extending direction when compressed in the extending direction in the usage state. Therefore, each of the upper side seal lips 21 and 22 bends and is difficult to curve (protrude) to the inner periphery side or the outer periphery side when compressed in the extending direction. In other words, each of the upper side seal lips 21 and 22 is difficult to buckle when compressed in the extending direction in the usage state. Therefore, the gasket 1 has high sealing performance.

Especially when the inner side surface 23a and the outer side surface 23b of the upper side seal lip 21 incline at the same angle or substantially the same angle with respect to the straight line orthogonal to the virtual straight line x as described above, the upper side seal lip 21 can be made more difficult to buckle in the usage state. Likewise, when the inner side surface 24a and the outer side surface 24b of the upper side seal lip 22 incline at the same angle or substantially the same angle with respect to the straight line orthogonal to the virtual straight line x as described above, the upper side seal lip 22 can be made more difficult to buckle in the usage state.

Further, as described above, each of the lower side seal lips 31 and 32 is tapered in the extending direction toward the tip, and easily deforms in the extending direction when compressed in the extending direction in the usage state. Therefore, each of the lower side seal lips 31 and 32 bends and is difficult to curve (protrude) to the inner periphery side or the outer periphery side when compressed in the extending direction. In other words, each of the lower side seal lips 31 and 32 is difficult to buckle when compressed in the extending direction in the usage state. Therefore, the gasket 1 has high sealing performance.

Especially when the inner side surface 33a and the outer side surface 33b of the lower side seal lip 31 incline at the same angle or substantially the same angle with respect to the straight line orthogonal to the virtual straight line x as described above, the lower side seal lip 31 can be made more difficult to buckle in the usage state. Likewise, when the inner side surface 34a and the outer side surface 34b of the lower side seal lip 32 incline at the same angle or substantially the same angle with respect to the straight line orthogonal to the virtual straight line x as described above, the lower side seal lip 32 can be made more difficult to buckle in the usage state.

Further, since each of the upper side seal lips 21 and 22 is tapered, and each of the lower side seal lips 31 and 32 is tapered, the gasket 1 is easily compressed in the up-down direction, a repulsive force of the gasket 1 is low when the cover 60 is attached to the case 50, and the cover 60 is easily attached to the case 50.

Further, the gasket 1 has the joining portion 40 that joins the upper side seal lip portion 20 and the lower side seal lip portion 30 between the upper side seal lip portion 20 and the lower side seal lip portion 30, and therefore the joining portion 40 supports the upper side seal lip portion 20 and the lower side seal lip portion 30 also in the usage state. Therefore, in the usage state, the upper side seal lips 21 and 22 are difficult to fall, and the lower side seal lips 31 and 32 are difficult to fall. In this way, the joining portion 40 has a fall prevention function for the upper side seal lips 21 and 22 and the lower side seal lips 31 and 32. By the fall prevention function for the upper side seal lips 21 and 22 and the lower side seal lips 31 and 32, owned by the joining portion 40, buckling of the upper side seal lips 21 and 22 and the lower side seal lips 31 and 32 can be prevented. When a thickness (width in the up-down direction) of the joining portion 40 is large, the joining portion 40 is more difficult to deform, and the fall prevention function for the respective seal lips 21, 22, 31, and 32 can be increased.

The gasket 1 has the recessed parts 2 and 3, and by adjusting the areas of the recessed parts 2 and 3 in the section, it is also possible to suppress a filling rate of the gasket 1 in the groove 51 from becoming excessive in the usage state. Thereby, it is possible to prevent occurrence of damage such as cracking or the like of the gasket 1 as a result of the gasket 1 being excessively compressed in the usage state, occurrence of protrusion of the gasket 1 into the gap G, and the like. A sectional area of the recessed part 2 of the gasket 1 can be easily adjusted by adjustment of the length of the upper side seal lips 21 and 22, and a sectional area of the recessed part 3 of the gasket 1 can be easily adjusted by adjustment of the length of the lower side seal lips 31 and 32.

Further, the upper side seal lips 21 and 22 and the lower side seal lips 31 and 32 protrude from the joining portion 40, and therefore the gasket 1 easily exhibits a so-called self-sealing action. That is to say, when the inner side of the case 50 and the cover 60 has high pressure, for example, a force due to the high pressure acts on surfaces on a high pressure side of the gasket 1, that is, the outer side surface 23b of the upper side seal lip 21 on the high pressure side, the outer side surface 33b of the lower side seal lip 31 on the high pressure side, and the inner peripheral surface 41 on the high pressure side of the joining portion 40, and the gasket 1 receives the force to be pressed against a low pressure side. At this time, the joining portion 40 is pressed against the side surface 51b on the outer periphery side of the groove 51, and the joining portion 40 is compressed in the virtual straight line x direction. Thereby, the upper side seal lips 21 and 22 are pushed toward the inner surface 60a of the cover 60, and the lower side seal lips 31 and 32 are pushed toward the bottom surface 51c of the groove 51, the respective tip end surfaces 25 and 26 of the upper side seal lips 21 and 22 are further pressed against the inner surface 60a of the cover 60, and the respective tip end surfaces 35 and 36 of the lower side seal lips 31 and 32 are further pressed against the bottom surface 51c of the groove 51. In this way, the self-sealing action of the gasket 1 can be obtained.

Especially when the joining portion 40 is positioned in the center or a vicinity of the center in the up-down direction of the gasket 1, the gasket 1 can exhibit the aforementioned self-sealing action more uniformly between the upper side seal lips 21 and 22 and the lower side seal lips 31 and 32. Further, when the thickness of the joining portion 40 is large, it is possible to make the joining portion 40 difficult to buckle even if the joining portion 40 receives the force from the high pressure side as described above, and make the gasket 1 exhibit the aforementioned self-sealing action more reliably. However, if the thickness of the joining portion 40 is too large, the filling rate of the gasket 1 in the groove 51 becomes excessive in the usage state, and therefore, the thickness of the joining portion 40 is preferably a thickness that takes these actions into consideration. Further, when the protrusion portions 10 and 11 are positioned in the center or the vicinity of the center in the up-down direction of the gasket 1, stability in the up-down direction of the gasket 1 in the groove 51 increases, and the gasket 1 can exhibit the aforementioned self-sealing action more reliably.

As described above, according to the gasket 1 according to the embodiment of the present invention, sealing performance can be enhanced.

Further, as a result of the gasket 1 having the same or substantially the same section over the extending direction as described above, a structure of a die for molding of the gasket 1 can be simplified, and manufacturing cost of the die can be reduced. Further, as a result of the structure of the die for molding of the gasket 1 can be simplified, occurrence of defect in molding the gasket 1 can be reduced.

Although the embodiment of the present invention is described thus far, the present invention is not limited to the gasket 1 according to the above-described embodiment of the present invention, but includes all aspects included in the concept and the claims of the present invention. The respective configurations may be selectively combined as appropriate to exhibit at least part of the aforementioned object and effects. For example, the shape, material, disposition, size and the like of each of the components in the above-described embodiment can be changed as appropriate according to a specific usage aspect of the present invention.

For example, the extending shape of the gasket 1 is not limited to the annular shape that forms one ring rectangular in plan view as illustrated in Fig. 1, but can take various shapes according to the extending shape of the groove 51 to which the gasket 1 is attached. For example, the extending shape of the gasket 1 may be a shape in which a series of a plurality of rings is formed.

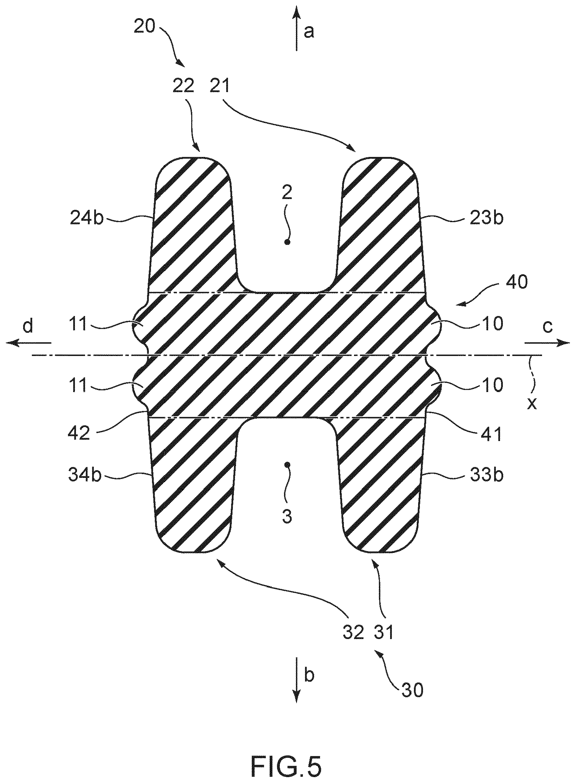

Further, the gasket 1 may have a plurality of protrusion portions 10 on the outer side surface 23b of the upper side seal lip 21, the inner peripheral surface 41 of the joining portion 40, and the outer side surface 33b of the lower side seal lip 31, and may have a plurality of protrusion portions 11 on the outer side surface 24b of the upper side seal lip 22, the outer peripheral surface 42 of the joining portion 40, and the outer side surface 34b of the lower side seal lip 32. For example, the gasket 1 may have two protrusion portions 10 on the inner peripheral surface (the outer side surface 23b, the inner peripheral surface 41, and the outer side surface 33b), and may have two protrusion portions 11 on the outer peripheral surface (the outer side surface 24b, the outer peripheral surface 42, and the outer side surface 34b). In this case, as illustrated in Fig. 5, for example, the two protrusion portions 10 are provided on the inner peripheral surface 41 of the joining portion 40, and the two protrusion portions 11 are provided on the outer peripheral surface 42 of the joining portion 40. Further, the two protrusion portions 10 and the two protrusion portions 11 correspond to each other in the virtual straight line x direction. The numbers of the protrusion portions 10 and 11 are not limited to two and may be three or more. When the plurality of protrusion portions 10 are provided on the inner peripheral surface of the gasket 1, and the plurality of protrusion portions 11 are provided on the outer peripheral surface of the gasket 1, the position of the gasket 1 in the groove 51 can be more stabilized.

### List of Reference Signs

1 gasket
2, 3 recessed part
10, 11 protrusion portion
20 one side seal lip portion (upper side seal lip portion)
21, 22 one side seal lip (upper side seal lip)
21a, 22a tip end portion
23a, 24a inner side surface
23b, 24b outer side surface
25, 26 tip end surface
30 another side seal lip portion (lower side seal lip portion)
31, 32 another side seal lip (lower side seal lip)
31a, 32a tip end portion
33a, 34a inner side surface
33b, 34b outer side surface
35, 36 tip end surface
40 joining portion
41 inner peripheral surface
42 outer peripheral surface
43 upper side surface
44 lower side surface
50 case
51 groove
51a, 51b side surface
51c bottom surface
52 outer edge portion
52a upper surface
60 cover
60a inner surface
G gap
x virtual straight line

## Claims

1. A gasket that is attached to a groove that opens into a gap between members to close the gap, **characterized by** comprising:
protrusion portions that are portions that respectively protrude to contact side surfaces facing each other of the groove;
a one side seal lip portion that is a portion formed to contact one of surfaces facing each other via the gap;
another side seal lip portion that is a portion formed to contact another one of the surfaces facing each other via the gap; and
a joining portion that is a portion that joins the one side seal lip portion and the other side seal lip portion,
wherein the joining portion extends along a virtual straight line in a section orthogonal to an extending direction of the gasket,
the one side seal lip portion has a pair of one side seal lips extending side by side between the protrusion portions in the joining portion,
the other side seal lip portion has a pair of other side seal lips extending side by side between the protrusion portions in the joining portion,
each of the one side seal lips is tapered, and
each of the other side seal lips is tapered.

2. The gasket according to claim 1,
**characterized in that** side surfaces facing in opposite directions to each other of each of the one side seal lips incline with respect to the virtual straight line in the section, and
side surfaces facing in opposite directions to each other of each of the other side seal lips incline with respect to the virtual straight line in the section.

3. The gasket according to claim 1 or 2, **characterized in that** the protrusion portions are formed on the joining portion.

4. The gasket according to claim 1, **characterized in that** the protrusion portions protrude in a direction of the virtual straight line, in the section.

5. The gasket according to claim 1, **characterized in that** the joining portion is in a shape in which the virtual straight line is a center line, in the section.

6. The gasket according to claim 1, **characterized in that** the one side seal lip portion and the other side seal lip portion are symmetrical with respect to the virtual straight line, in the section.

7. The gasket according to claim 1, **characterized in that** each of the protrusion portions is in a shape in which the virtual straight line is a center line, in the section.
